# EUROPEAN PATENT APPLICATION

(11) **EP 4 398 126 A1**
(43) Date of publication of application: **10.07.2024**
(21) Application number: 23197362.9
(22) Date of filing: 14.09.2023
(51) Int. Cl.: G06F 16/783, G06N 3/045

(54) **SEMANTICS CONTENT SEARCHING**

(30) Priority: 03.01.2023 US 202318092859
(71) Applicant: Disney Enterprises, Inc., Burbank, CA 91521 (US); Hulu, LLC, Santa Monica, CA 90404 (US)
(72) Inventor: VILELA, Danny, Burbank, CA, 91521 (US); WHITESELL, Benjamin, Burbank, CA, 91521 (US); MAZAGONWALLA, Afshaan, Burbank, CA, 91521 (US); KECK, Anastasia, Burbank, CA, 91521 (US)
(74) Representative: Dr. Weitzel & Partner

(57) **Abstract**

A system includes a processor and a memory storing software code configured to support semantic content searching, one or more machine learning (ML) model(s) trained to translate between images and text, and a search engine populated with content representations output by the ML model(s). The software code is executed to receive a semantic content search query describing a searched content, generate, using the ML model(s) and the semantic content search query, a content representation corresponding to the searched content, and compare, using the search engine, the generated content representation with the content representations populating the search engine to identify one or more candidate matches for the searched content. The software code is further executed to identify one or more content unit(s) each corresponding respectively to one of the candidate matches, and output a query response identifying at least one of the identified content unit(s).

## Description

The present invention refers to a method and system for semantic content searching.

### BACKGROUND

Digital media content in the form of streaming movies and television (TV) content, for example, is consistently sought out and enjoyed by users. Nevertheless, the popularity of a particular item of content, for example, a particular movie, TV series, or even a specific TV episode can vary widely. In some instances, that variance in popularity may be due to fundamental differences in personal taste amongst users. However, in many instances, the lack of user interaction with content may be due less to its inherent undesirability to those users than to their lack of familiarity with that content, or even a lack of awareness that the content exists or is available.

Conventional approaches for enabling users to find content of interest include providing search functionality as part of the user interface, for example in the form of a search bar. Conventional search algorithms in streaming platforms use keywords to search for content, including: content titles, actor names, genres. That is to say, in order to use conventional search functionality effectively, users must have *a priori* knowledge about which titles, actors, or genres they are searching for. However, that reliance on *a priori* knowledge by a user regarding what content the user is searching for limits the utility of the "search" function by failing to facilitate the search for and discovery of new content. Thus conventional searching undesirably redirects users to familiar content while serving as a relatively ineffective tool for surfacing new or unfamiliar content. Due to the resources often devoted to developing new content, however, the efficiency and effectiveness with which content likely to be desirable to users can be introduced to those users has become increasingly important to the producers, owners, and distributors of digital media content.

The invention is defined by the features of the independent claims. The dependent claims describe preferred embodiments.

One embodiment of the present invention provides a method for semantic content searching, the method comprising:
providing at least one machine learning, ML, model trained to translate between images and text, and a search engine populated with a plurality of content representations output by the at least one ML model;
receiving a semantic content search query describing a searched content;
generating, using the at least one ML model and the semantic content search query, a content representation corresponding to the searched content;
comparing, using the search engine, the generated content representation with the plurality of content representations to identify one or more candidate matches for the searched content;
identifying one or more content units each corresponding respectively to one of the one or more candidate matches; and
outputting a query response identifying at least one of the one or more content units.

Preferably the method, wherein the search engine comprises a scalable vector search engine, and wherein the plurality of content representations comprises a plurality of vector embeddings.

Preferably the method, wherein the plurality of vector embeddings comprise a first plurality of image embeddings and a second plurality of text embeddings.

Preferably the method, wherein the content representation corresponding to the searched content comprises an image embedding generated based on the semantic content search query.

Preferably the method, wherein the at least one ML model comprises a trained zero-shot neural network, NN.

Preferably the method, wherein the trained zero-shot NN comprises a text encoder and an image encoder.

Preferably the method, wherein the one or more content units each corresponding respectively to one of the one or more candidate matches comprise a plurality of content units having differing time durations.

Preferably the method, wherein the one or more content units each corresponding respectively to one of the one or more candidate matches comprise at least one of a frame, a shot, or a scene of video.

Preferably the method, further comprising:
obtaining for each of the at least one of the one or more content units identified in the query response, first and second bounding timestamps for a respective content segment including that at least one content unit;
wherein the query response includes the each first and second bounding timestamps.

Preferably the method, wherein each respective content segment comprises at least one of a shot or scene from an episode of episodic entertainment content, a shot or scene from a movie, the episode, or the movie.

One embodiment of the present invention provides a system comprising a processing hardware and a memory storing a software code, characterized by:
the processing hardware adapted to execute the software code to perform the method as described herein.

One embodiment of the present invention provides a system comprising:
a hardware processor
a system memory storing a software code configured to support semantic content searching, at least one machine learning (ML) model trained to translate between images and text, and a search engine populated with a plurality of content representations output by the at least one ML model;
the hardware processor configured to execute the software code to:
   receive a semantic content search query describing a searched content;
   generate, using the at least one ML model and the semantic content search query, a content representation corresponding to the searched content;
   compare, using the search engine, the generated content representation with the plurality of content representations to identify one or more candidate matches for the searched content;
   identify one or more content units each corresponding respectively to one of the one or more candidate matches; and
   output a query response identifying at least one of the one or more content units.

Preferably the system, wherein the search engine comprises a scalable vector search engine, and wherein the plurality of content representations comprises a plurality of vector embeddings.

Preferably the system, wherein the plurality of vector embeddings comprise a first plurality of image embeddings and a second plurality of text embeddings.

Preferably the system, wherein the content representation corresponding to the searched content comprises an image embedding generated based on the semantic content search query.

Preferably the system, wherein the at least one ML model comprises a trained zero-shot neural network (NN).

Preferably the system, wherein the trained zero-shot NN comprises a text encoder and an image encoder.

Preferably the system, wherein the one or more content units each corresponding respectively to one of the one or more candidate matches comprise a plurality of content units having differing time durations.

Preferably the system, wherein the one or more content units each corresponding respectively to one of the one or more candidate matches comprise at least one of a frame, a shot, o Preferably the system, wherein the hardware processor is further configured to execute the software code to:
obtain, for each of the at least one of the one or more content units identified in the query response, first and second bounding timestamps for a respective content segment including that at least one content unit;
wherein the query response includes the each first and second bounding timestamps.

Preferably the system, wherein each respective content segment comprises at least one of a shot or scene from an episode of episodic entertainment content, a shot or scene from a movie, the episode, or the movie.

One embodiment of the present invention provides a method for use by a system including a hardware processor and a system memory storing a software code configured to support semantic content searching, at least one machine learning (ML) model trained to translate between images and text, and a search engine populated with a plurality of content representations output by the at least one ML model, the method comprising:
receiving, by the software code executed by the hardware processor, a semantic content search query describing a searched content;
generating, by the software code executed by the hardware processor and using the at least one ML model and the semantic content search query, a content representation corresponding to the searched content;
comparing, by the software code executed by the hardware processor and using the search engine, the generated content representation with the plurality of content representations to identify one or more candidate matches for the searched content;
identifying, by the software code executed by the hardware processor, one or more content units each corresponding respectively to one of the one or more candidate matches; and
outputting, by the software code executed by the hardware processor, a query response identifying at least one of the one or more content units.

Preferably the method, wherein the search engine comprises a scalable vector search engine, and wherein the plurality of content representations comprises a plurality of vector embeddings.

Preferably the method, wherein the plurality of vector embeddings comprise a first plurality of image embeddings and a second plurality of text embeddings.

Preferably the method, wherein the content representation corresponding to the searched content comprises an image embedding generated based on the semantic content search query.

Preferably the method, wherein the at least one ML model comprises a trained zero-shot neural network (NN).

Preferably the method, wherein the trained zero-shot NN comprises a text encoder and an image encoder.

Preferably the method, wherein the one or more content units each corresponding respectively to one of the one or more candidate matches comprise a plurality of content units having differing time durations.

Preferably the method, wherein the one or more content units each corresponding respectively to one of the one or more candidate matches comprise at least one of a frame, a shot, or a scene of video.

Preferably the method, further comprising:
obtaining, by the software code executed by the hardware processor, for each of the at least one of the one or more content units identified in the query response, first and second bounding timestamps for a respective content segment including that at least one content unit;
wherein the query response includes the each first and second bounding timestamps.

Preferably the method, wherein each respective content segment comprises at least one of a shot or scene from an episode of episodic entertainment content, a shot or scene from a movie, the episode, or the movie.

### BRIEF DESCRIPTION OF THE DRAWINGS

Figure 1 shows an exemplary system for performing semantic content searching, according to one implementation;
Figure 2 shows a flow diagram of an exemplary processing pipeline for performing semantic content searching, according to one implementation;
Figure 3 shows a flow diagram of an exemplary processing pipeline for performing semantic content searching, according to another implementation; and
Figure 4 shows a flowchart presenting an exemplary method for performing semantic content searching, according to one implementation.

### DETAILED DESCRIPTION

The following description contains specific information pertaining to implementations in the present disclosure. One skilled in the art will recognize that the present disclosure may be implemented in a manner different from that specifically discussed herein. The drawings in the present application and their accompanying detailed description are directed to merely exemplary implementations. Unless noted otherwise, like or corresponding elements among the figures may be indicated by like or corresponding reference numerals. Moreover, the drawings and illustrations in the present application are generally not to scale, and are not intended to correspond to actual relative dimensions.

The present application discloses systems and methods for performing semantic content searching, in particular for video retrieval in a streaming service or platform. As described above, conventional search algorithms in streaming platforms use keywords to search for content, including: content titles, actor names, genres. That is to say, in order to use conventional search functionality effectively, users must have *a priori* knowledge about which titles, actors, or genres they are searching for. However, that reliance on *a priori* knowledge by a user regarding what content the user is searching for limits the utility of the "search" function by failing to facilitate the search for and discovery of new content. Thus conventional searching undesirably redirects users to familiar content while serving as a relatively ineffective tool for surfacing new or unfamiliar content. Thus there is a need in the art for a searching capability that understands a searcher's intent and meaning to enable further content discovery.

The content search and retrieval solution disclosed in the present application advances the state-of-the-art by enabling semantic content search. Specifically, the traditional search experience is augmented according to the present novel and inventive concepts to allow users to search for content with a semantic query that may include general or even generic search terms, such as "a heroic transformation," "a high-speed chase," or "sunset on a beach," to name a few examples, as opposed to searching for content by title, genre, or actors. By doing so, the present solution more fully actualizes the utility of the search bar by enabling content discovery without requiring users to break their on-channel experience, by searching for a show title on a third party search engine.

More broadly, the present semantic content search utilizes a machine learning (ML) model trained to understand and translate between text and images. This enables users to search for a frame, shot, or scene among all content included in a content database (hereinafter referred to as a "catalog search"), to search for a frame, shot, or scene within a single video (hereinafter "smart scrub search"), and enables marketing partners of a content distribution platform to better optimize advertisement placement by designing a less intrusive and more relevant advertising experience to users.

Because the present semantic content search solution does not require *a priori* knowledge of particular categories of search terms, or a specific query syntax, it is more intuitive for users desiring to discover new content, rather than re-familiarize themselves with existing and known content. The present semantic content search solution advantageously enables users to search for content based on what is happening within the content, rather than based on annotation tags applied to the content. For example, given a semantic content search query "a cozy Christmas scene," traditional search engines will identify content having a title matching any of those keywords, as well as content determined to by similar to that content. By contrast, the present semantic content search solution searches the content catalog for content that actually contains an image or images that not only depict Christmas, but that show an environment or actions conveying the notion of coziness as well.

The text-to-image and image-to-text translation required by the present semantic content search solution, when applied at the per frame, per shot, or per scene level of granularity to a catalog of thousands of units of long form content makes human performance of the present semantic content searching impracticable or impossible, even with the assistance of the processing and memory resources of a general purpose computer. The novel and inventive systems and methods disclosed in the present application advance the state-of-the-art by introducing an artificial intelligence (AI) inspired automated ML model-based approach to generating representations of various sized segments of content, such as representation in the form of vector embeddings for example, and populating a scalable search engine with those content representations. A semantic content search query for content is translated into an analogous representation by the ML model, and that generated representation is compared by the search engine to the content representations populating the search engine to identify one or more candidate matches to the content being searched for.

As used in the present application, the terms "automation," "automated," and "automating" refer to systems and processes that do not require the participation of a human system operator. Although, in some implementations, a system operator or administrator may review or even adjust the performance of the automated systems and according to the automated methods described herein, that human involvement is optional. Thus, the methods described in the present application may be performed under the control of hardware processing components of the disclosed automated systems.

It is also noted that, as defined in the present application, the expression "machine learning model" may refer to a mathematical model for making future predictions based on patterns learned from samples of data or "training data." For example, machine learning models may be trained to perform image processing, natural language understanding (NLU), and other inferential data processing tasks. Various learning algorithms can be used to map correlations between input data and output data. These correlations form the mathematical model that can be used to make future predictions on new input data. Such a predictive model may include one or more logistic regression models, Bayesian models, or artificial neural networks (NNs). A "deep neural network," in the context of deep learning, may refer to a NN that utilizes multiple hidden layers between input and output layers, which may allow for learning based on features not explicitly defined in raw data. As used in the present application, a feature identified as a NN refers to a deep neural network.

As defined for the purposes of the present application, the expression "semantic content search query" refers to a free-form search query providing a general description of content. The general description may contain adjectives describing a mood or feeling, or verbs describing action and may omit traditional search keywords such as titles, genres, actors, and characters. It is noted that the content referred to in the present application refers to content of widely varying types. Examples of the types of content to which the present semantic content search solution may be applied include audio-video content having both audio and video components, and video unaccompanied by audio. In addition, or alternatively, in some implementations, the type of content that is searched according to the present novel and inventive principles may be or include digital representations of persons, fictional characters, locations, objects, and identifiers such as brands and logos, for example, which populate a virtual reality (VR), augmented reality (AR), or mixed reality (MR) environment. Moreover, that content may depict virtual worlds that can be experienced by any number of users synchronously and persistently, while providing continuity of data such as personal identity, user history, entitlements, possessions, payments, and the like. It is noted that the semantic content search solution disclosed by the present application may also be applied to content that is a hybrid of traditional audio-video and fully immersive VR/AR/MR experiences, such as interactive video.

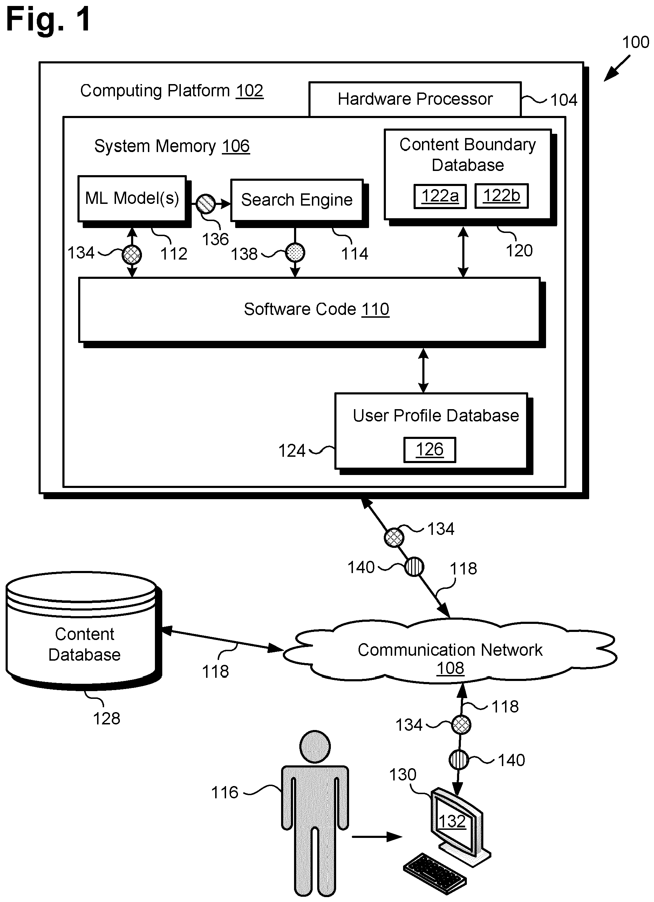

Figure 1 shows exemplary system 100 for performing semantic content searching, according to one implementation. As shown in Figure 1, system 100 includes computing platform 102 having hardware processor 104 and system memory 106 implemented as a computer-readable non-transitory storage medium. According to the present exemplary implementation, system memory 106 stores software code 110 configured to support semantic content searching, one or more ML models 112 (hereinafter "MI, model(s) 112") trained to translate between images and text, search engine 114 populated with content representations output by ML model(s) 112, content boundary database 120 including first and second bounding timestamps for multiple content segments including content segments 122a and 122b, and user profile database 124 including user profile 126.

As further shown in Figure 1, system 100 is implemented within a use environment including communication network 108, content database 128, user system 130 including display 132, and user 116 of system 100 and user system 130. In addition, Figure 1 shows semantic content search query 134 describing searched content and received by system 100 from user system 130, content representation 136 generated using ML model(s) 112 and semantic content search query 134, search result 138 provided by search engine 114, and query response 140 output to user system 130 by system 100. Also shown in Figure 1 are network communication links 118 of communication network 108 interactively connecting system 100, content database 128, and user system 130.

It is noted that although content database 128 is depicted as a database remote from system 100 and accessible via communication network 108 and network communication links 118, that representation too is merely by way of example. In other implementations, content database 128 may be included as a feature of system 100 and may be stored in system memory 106. It is further noted that although content boundary database 120 is shown to include first and second bounding timestamps for two content segments 122a and 122b, that representation is merely exemplary. In other implementations, content boundary database 120 may include first and second bounding timestamps for thousands, tens of thousands, hundreds of thousands, or millions of content segments. It is also noted that although user profile database 124 is depicted as including a single user profile 126 of user 116, that representation too is provided merely by way of example. More generally, user profile database 124 may include a user profile for each user of system 100, such as each of hundreds, thousands, tens of thousands, hundreds of thousands, or millions of users of system 100, for example.

Although the present application refers to software code 110, ML model(s) 112, search engine 114, content boundary database 120, and user profile database 124 as being stored in system memory 106 for conceptual clarity, more generally, system memory 106 may take the form of any computer-readable non-transitory storage medium. The expression "computer-readable non-transitory storage medium," as used in the present application, refers to any medium, excluding a carrier wave or other transitory signal that provides instructions to hardware processor 104 of computing platform 102. Thus, a computer-readable non-transitory storage medium may correspond to various types of media, such as volatile media and non-volatile media, for example. Volatile media may include dynamic memory, such as dynamic random access memory (dynamic RAM), while non-volatile memory may include optical, magnetic, or electrostatic storage devices. Common forms of computer-readable non-transitory storage media include, for example, optical discs such as DVDs, RAM, programmable read-only memory (PROM), erasable PROM (EPROM), and FLASH memory.

Moreover, although Figure 1 depicts software code 110, ML model(s) 112, search engine 114, content boundary database 120, and user profile database 124 as being co-located in system memory 106, that representation is also provided merely as an aid to conceptual clarity. More generally, system 100 may include one or more computing platforms 102, such as computer servers for example, which may be co-located, or may form an interactively linked but distributed system, such as a cloud-based system, for instance. As a result, hardware processor 104 and system memory 106 may correspond to distributed processor and memory resources within system 100. Consequently, in some implementations, one or more of software code 110, ML model(s) 112, search engine 114, content boundary database 120, and user profile database 124 may be stored remotely from one another on the distributed memory resources of system 100. It is also noted that, in some implementations, one or both of ML model(s) 112 and search engine 114 may take the form of software modules included in software code 110.

Hardware processor 104 may include multiple hardware processing units, such as one or more central processing units, one or more graphics processing units, and one or more tensor processing units, one or more field-programmable gate arrays (FPGAs), custom hardware for machine-learning training or inferencing, and an application programming interface (API) server, for example. By way of definition, as used in the present application, the terms "central processing unit" (CPU), "graphics processing unit" (GPU), and "tensor processing unit" (TPU) have their customary meaning in the art. That is to say, a CPU includes an Arithmetic Logic Unit (ALU) for carrying out the arithmetic and logical operations of computing platform 102, as well as a Control Unit (CU) for retrieving programs, such as software code 110, from system memory 106, while a GPU may be implemented to reduce the processing overhead of the CPU by performing computationally intensive graphics or other processing tasks. A TPU is an application-specific integrated circuit (ASIC) configured specifically for AI processes such as machine learning.

In some implementations, computing platform 102 may correspond to one or more web servers accessible over a packet-switched network such as the Internet, for example. Alternatively, computing platform 102 may correspond to one or more computer servers supporting a wide area network (WAN), a local area network (LAN), or included in another type of private or limited distribution network. In addition, or alternatively, in some implementations, system 100 may utilize a local area broadcast method, such as User Datagram Protocol (UDP) or Bluetooth, for instance. Furthermore, in some implementations, system 100 may be implemented virtually, such as in a data center. For example, in some implementations, system 100 may be implemented in software, or as virtual machines. Moreover, in some implementations, communication network 108 may be a high-speed network suitable for high performance computing (HPC), for example a 10 GigE network or an Infiniband network.

It is further noted that, although user system 130 is shown as a desktop computer in Figure 1, that representation is provided merely by way of example. In other implementations, user system 130 may take the form of any suitable mobile or stationary computing device or system that implement data processing capabilities sufficient to provide a user interface, support connections to communication network 108, and implement the functionality ascribed to user system 130 herein. That is to say, in other implementations, user system 130 may take the form of a laptop computer, tablet computer, or smartphone, or a wearable device such as a smartwatch or AR or VR device, to name a few examples. Alternatively, in some implementations, user system 130 may be a "dumb terminal" peripheral device of system 100. In those implementations, display 132 may be controlled by hardware processor 104 of computing platform 102.

It is also noted that display 132 of user system 130 may take the form of a liquid crystal display (LCD), a light-emitting diode (LED) display, an organic light-emitting diode (OLED) display, a quantum dot (QD) display, or any other suitable display screen that perform a physical transformation of signals to light. Furthermore, display 132 may be physically integrated with user system 130 or may be communicatively coupled to but physically separate from user system 130. For example, where user system 130 is implemented as a smartphone, laptop computer, or tablet computer, display 132 will typically be integrated with user system 130. By contrast, where user system 130 is implemented as a desktop computer, display 132 may take the form of a monitor separate from user system 130 in the form of a computer tower.

By way of overview, user 116, who may be a content consumer, such as a subscriber or guest user of a steaming content platform, for example. User 116 may utilize user system 130 to submit semantic content search query 134 describing a type of content desired by user 116 (hereinafter "searched content") to system 100. Hardware processor 104 of computing platform 102 may execute software code 110 to receive semantic content search query 134 describing the searched content, generate, using ML model(s) 112 and semantic content search query 134, content representation 136 corresponding to the searched content, and compare, using search engine 114, the content representation 136 with content representations populating search engine 114, to provide search result 138 identify one or more candidate matches for the searched content. Hardware processor 104 may further execute software code 110 to identify one or more content units each corresponding respectively to one of the one or more candidate matches, and output, based on one or more of a variety of business rules, ranking criteria, or both, query response 140 identifying at least one of the one or more content units. Moreover, in some implementations system 100 may be configured to output query response 140 to user system 130 in real-time with respect to receiving semantic content search query 134. It is noted that, as defined for the purposes of the present application, the expression "real-time" refers to a time interval of less than approximately fifteen seconds (15s), such as 5s, or less.

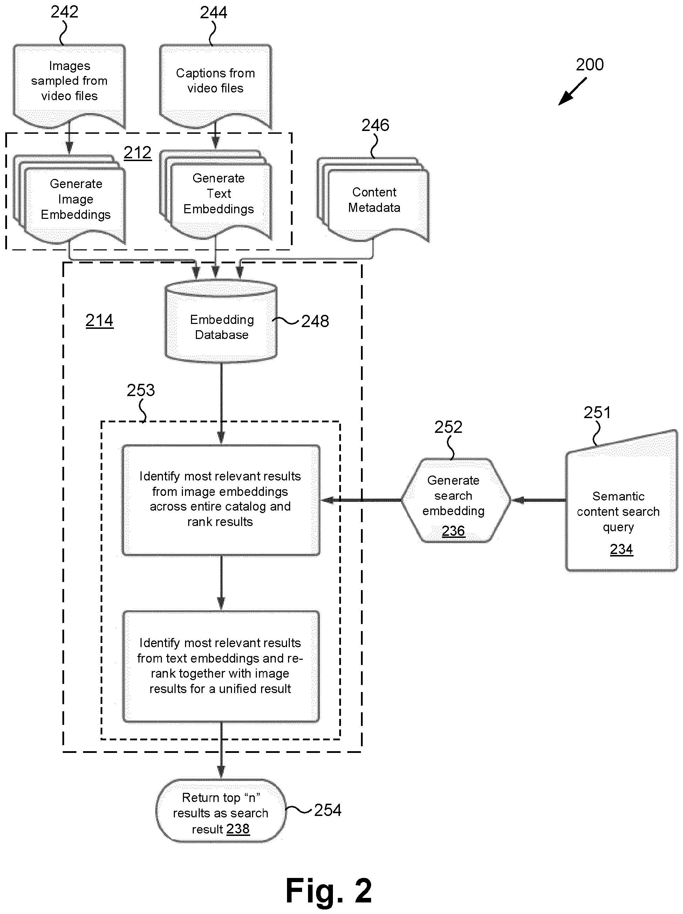

Figure 2 shows flow diagram 200 of an exemplary processing pipeline for performing semantic content searching, according to one implementation. It is noted that flow diagram 200 describes an exemplary use case in which video content is represented by vector embeddings (hereinafter "embeddings") that populate a scalable vector search engine, such as the open source Qdrant search engine for example. According to exemplary flow diagram 200, images 242 sampled from video files and captions 244 sampled from those same video files are used to train one or more ML models 212 (hereinafter ML model(s) 212") to generate image embeddings and text embeddings that populate embedding database 248 of search engine 214. By way of example, ML model(s) 212 may take the form of one or more zero-shot NNs, such as one or more Contrastive Language-Image Pre-Training (CLIP) models, for example, trained using image-text pairs. Alternatively, in some implementations, ML model(s) 212 may take the form of one or more one-shot ML models or one or more few shot ML models.

Machine learning on video typically operates at the scene level, rather than at the frame level. Consequently, in order to train ML model(s) 212 to generate the desired image embeddings at frame level, frame sampling rate may also be used as a training input when training ML model(s) 212. Once a text-to-image correlation has been established captions 244 and content metadata 246 can be concatenated or otherwise associated with the image data in the embeddings, thereby advantageously enabling a powerful semantic content search capability having a high degree of selectivity based on user search criteria.

Thus, and as shown in Figure 2, in some implementations, in addition to the image and text embeddings output by ML model(s) 212, embedding database 248 of search engine 214 may further include content metadata 246 associated with the video clips used to generate the image and text embeddings. Once embedding database 248 is populated, the system including ML model(s) 212 and search engine 214, i.e., system 100 in Figure 1, is runtime ready to receive semantic content search query 234 from user 116. As further shown by Figure 2, at runtime, and in response to receiving semantic content search query 234 describing a searched content, the system implementing the processing pipeline described by flow diagram 200 utilizes ML model(s) 212 to generate search embedding 236 (hereinafter also "content representation 236") corresponding to the searched content described by semantic content search query 234. Search engine 214 may then be used to compare generated content representation 236 to the embeddings populating search engine 214.

For example, in one implementation as shown in Figure 2, content search query 234 may be received from a user system, such as user system 130 in Figure 1, in action 251, and may be used to generate search embedding 236 in action 252. In action 253, search engine 214 may perform a catalog search to identify the most similar or otherwise relevant image embeddings relative to the generated search embedding and rank the results based on one or more predetermined ranking criteria, may also perform a search to identify the most similar or otherwise relevant text embeddings relative to the generated search embedding, and may re-rank the results based on the separate search results to produce a consolidated ranking. A predetermined integer number "n" of the highest ranked results from the consolidated ranking may then be output by search engine 214 as search result 238 in action 254.

With respect to the features represented in Figure 2, it is noted that ML model(s) 212, search engine 214, semantic content search query 234, content representation 236, and search result 238 correspond respectively in general to ML model(s) 112, search engine 114, semantic content search query 134, content representation 136, and search result 138, in Figure 1. Consequently, ML model(s) 112, search engine 114, semantic content search query 134, content representation 136, and search result 138 may share any of the characteristics attributed to respective ML model(s) 212, search engine 214, semantic content search query 234, content representation 236, and search result 238 by the present disclosure, and vice versa.

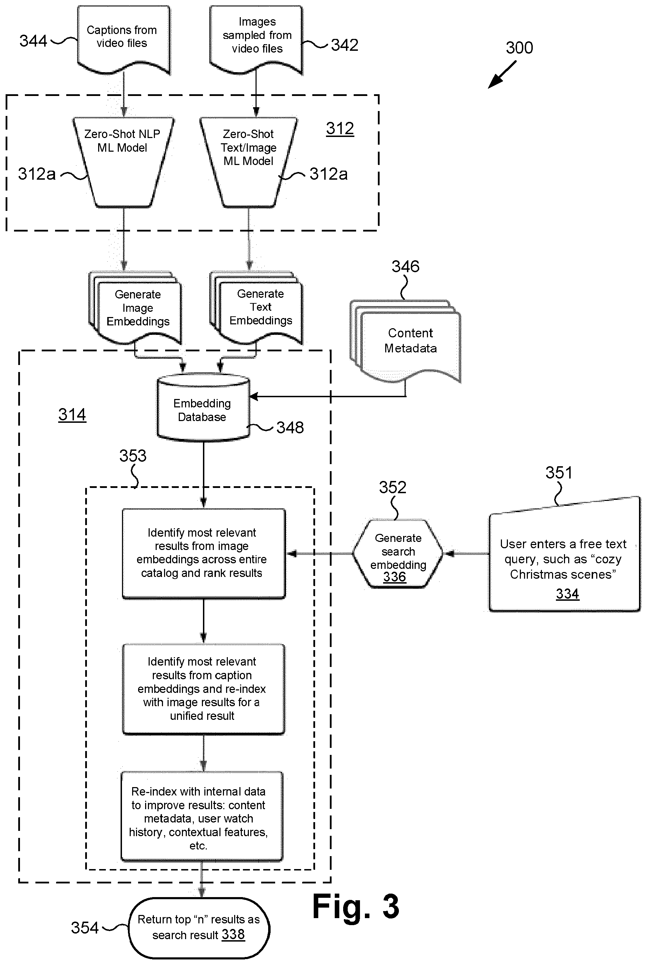

Figure 3 shows flow diagram 300 of an exemplary processing pipeline for performing semantic content searching, according to another implementation. It is noted that, like flow diagram 200, flow diagram 300 describes an exemplary use case in which video content is represented by embeddings that populate a scalable vector search engine. According to exemplary flow diagram 300, images 342 sampled from video files and captions 344 sampled from those same video files may be used to train ML models 312, which may include zero-shot natural language processing (NLP) ML model 312a and zero-shot text/image ML model 312b, to generate image embeddings and text embeddings that populate embedding database 348 of search engine 314. It is noted that although ML models 312 are described as zero-shot ML models in Figure 3, in some implementations, ML models 212 may be one-shot ML models or few shot ML models.

As noted above, machine learning on video typically operates at the scene level, rather than at the frame level. Consequently, in order to train ML model(s) 312 to generate the desired image embeddings at frame level, frame sampling rate may also be used as a training input when training ML models 312. As shown in Figure 3, in some implementations, in addition to the image and text embeddings output by ML model(s) 312, embedding database 348 of search engine 314 may further include content metadata 346 associated with the video clips used to generate the image and text embeddings. Once a text-to-image correlation has been established captions 344 and content metadata 346 can be concatenated or otherwise associated with the image data in the embeddings, thereby advantageously enabling a powerful semantic content search capability having a high degree of selectivity based on user search criteria.

Thus, and as shown in Figure 3, in some implementations, in addition to the image and text embeddings output by ML models 312, embedding database 348 of search engine 314 may further include metadata associated with the video clips used to generate the image and text embeddings. Once embedding database 348 is populated, the system including ML models 312 and search engine 314, i.e., system 100 in Figure 1, is runtime ready to receive a semantic content search query from user 116. As further shown by Figure 3, at runtime, and in response to receiving semantic content search query 334 describing a searched content, the system implementing the processing pipeline described by flow diagram 300 utilizes ML models 312 to generate search embedding 336 (hereinafter "content representation 336") corresponding to the searched content described by semantic content search query 334. Search engine 314 may then be used to compare generated content representation 336 to the embeddings populating search engine 314.

For example, in one example as shown in Figure 3, content search query 334 may be received from a user system, such as user system 130 in Figure 1, in action 351, and may be used to generate search embedding 336 in action 352. In action 353, search engine 314 may perform a catalog search to identify the most similar or otherwise relevant image embeddings relative to the generated search embedding and rank the results based on one or more predetermined ranking criteria, may perform a search to identify the most similar or otherwise relevant text embeddings relative to the generated search embedding, and may re-index or re-rank the results based on the separate search results to produce a unified result. As further shown by Figure 3, in some implementations, action 353 may further include having search engine 314 re-index the unified results based on content metadata 346, information included in user profile 126 of user 116, and contextual data such as the time of day, day of week, or holiday season that semantic content search query 334 is received by system 100, as well as whether a particular item of content is newly launched. A predetermined integer number "n" of the highest ranked results from the final ranking may then be output by search engine 314 as search result 338 in action 354.

With respect to the features represented in Figure 3, it is noted that ML models 312, search engine 314, semantic content search query 334, content representation 336, and search result 338 correspond respectively in general to ML model(s) 112/212, search engine 114/214, semantic content search query 134/234, content representation 136/236, and search result 138/238, in Figures 1 and 2. Consequently, ML model(s) 112/212, search engine 114/214, semantic content search query 134/234, content representation 136/236, and search result 138/238 may share any of the characteristics attributed to respective ML models 312, search engine 314, semantic content search query 334, content representation 336, and search result 338 by the present disclosure, and vice versa.

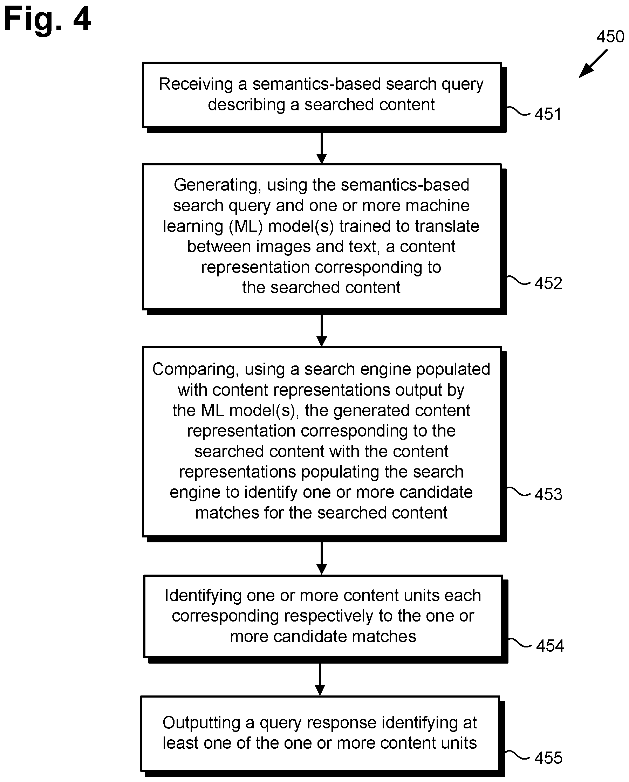

The functionality of system 100 and software code 110 will be further described by reference to Figure 4. Figure 4 shows flowchart 450 presenting an exemplary method for performing semantic content searching, according to one implementation. With respect to the actions described in Figure 4, it is noted that certain details and features have been left out of flowchart 450 in order not to obscure the discussion of the inventive features in the present application.

Referring to Figure 4 in combination with Figures 1, 2, and 3, flowchart 450 begins with receiving semantic content search query 134/234/334 describing a searched content, i.e., a content being searched for by user 116 (action 451). As also noted above, the content being searched for by user 116 may include audio-video content having both audio and video components, and video unaccompanied by audio. In addition, or alternatively, in some implementations, the type of content being searched for by user 116 may be or include digital representations of persons, fictional characters, locations, objects, and identifiers such as brands and logos, for example, which populate a VR, AR, or MR environment. Moreover, that content may depict virtual worlds that can be experienced by any number of users synchronously and persistently, while providing continuity of data such as personal identity, user history, entitlements, possessions, payments, and the like. It is noted that the semantic content search solution disclosed by the present application may also be applied to content that is a hybrid of traditional audio-video and fully immersive VR/AR/MR experiences, such as interactive video.

It is noted that, in some use cases, in addition to identifying the content being searched for by user 116, semantic content search query may also specify whether the search is to be a catalog search or a smart scrub search, as those expressions are described above. In use cases in which a smart scrub search is to be performed, 134/234/334 will typically also identify the particular video or videos, such as a specific movie or movie franchise for example, to be searched. Semantic content search query 134/234/334 may be received in action 451 by software code 110, executed by hardware processor 104 of system 100. As shown in Figure 1, semantic content search query 134/234/334 may be received from user system 130 via communication network 108 and network communication links 118. It is noted that semantic content search query 134/234/334 may be generated in response to a variety of different types of inputs to user system 130 by user 116. For example, user 116 may use a manual input device of user system 130, such as a mouse, keyboard, trackpad, or touchscreen to enter semantic content search query 134/234/334. Alternatively, user 116 may issue a speech command describing the searched content user 116 seeks to find. It is further noted that action 451 of flowchart 450 corresponds in general to actions 251 and 351 in respective Figures 2 and 3.

Continuing to refer to Figures 1, 2, 3, and 4 in combination, flowchart 450 further includes generating, using ML model(s) 112/212/312 trained to translate between images and text, and semantic content search query 134/234/334, content representation 136/236/336 corresponding to the content being searched for by user 116 and described by semantic content search query 134/234/334 (action 452). As noted above, in some implementations, search engine 114/214/314 may take the form of a scalable vector search engine, such as the open source Qdrant search engine for example. In those implementations, content representation 136/236/336 may be an embedding (referred to above as a "search embedding"), such as an image embedding, generated by ML model(s) 112/212/312 based on semantic content search query 134/234/334 for the purpose of comparison with the embeddings populating search engine 114/214/314. The generation of content representation 136/236/336 in action 452 may be performed by software code 110, executed by hardware processor 104 of system 100, and using ML model(s) 112/212/312. It is noted that ML model(s) 112/212/312 may be implemented as one or more zero-shot NNs including a text encoder and an image encoder, such as one or more CLIP models. It is further noted that action 452 of flowchart 450 corresponds in general to actions 252 and 352 in respective Figures 2 and 3.

Continuing to refer to Figures 1, 2, 3, and 4 in combination, flowchart 450 further includes comparing, using search engine 114/214/314, content representation 136/236/336 with the content representations populating search engine 114/214/314 to identify one or more candidate matches for the content being searched for by user 116 (action 453). By way of example, where search engine 114/214/314 is a vector search engine and content representation 136/236/336 is a search embedding generated by ML model(s) 112/212/312, action 453 may include comparing the Euclidean distances between content representation 136 and the embeddings populating search engine 114/214/314, which, as noted above, may include multiple image embeddings generated from video files and multiple text embeddings from captions accompanying those same video file.

Moreover, and as noted above by reference to Figures 2 and 3, in some implementations, in addition to the image and text embeddings output by ML model(s) 112/212/312, search engine 114/214/314 may further include metadata associated with the video clips used to generate the image and text embeddings. In implementations in which embedding database 248 of search engine 114/214/314 includes metadata associated with the video clips used to generate the image and text embeddings, the comparison performed in action 453 may further including comparing terms used in semantic content search query 134/234/334 to describe the content being searched for by user 116 with such metadata. Action 453 may be performed by software code 110, executed by hardware processor 104 of system 100, and using search engine 114/214/314. It is noted that action 453 of flowchart 450 corresponds in general to actions 253 and 353 in respective Figures 2 and 3.

Continuing to refer to Figures 1, 2, 3, and 4 in combination, flowchart 450 further includes providing search result 138/238/338 that identifies one or more content units each corresponding respectively to one of the one or more candidate matches (action 454). Each of the embeddings populating embedding database 248 of search engine 114/214/314 may identify a content unit in the form of a single video frame, a shot of video, or a scene including multiple shots. That is to say, the content units represented in embedding database 248 of search engine 114/214/314 may include content units having different time durations, different frame counts, or both. The identity of such content units may include the title of the long form content in which they are located, a frame number or numbers of the content unit, timestamps corresponding to the beginning and end of the content unit, or any combination of those parameters.

As stated above, action 454 may include identifying content units corresponding respectively to one, some, but less than all of the candidate matches identified in action 453. In some use cases, for example, frames, shots, or scenes from the same long form content may be represented by more than one of the candidate matches identified in action 453. In those use cases, one or more samples of potentially duplicative content from the same long form content may be culled from the identified candidate matches. Alternatively, or in addition, user profile 126 of user 116 may be utilized to winnow out content, or include content, from among the candidate matches based on a prior consumption history of user 116, or on the bases of platform activity by user 116, such as other searches. Action 454 may be performed by software code 110, executed by hardware processor 104 of system 100. It is noted that action 454 of flowchart 450 corresponds in general to actions 254 and 354 in respective Figures 2 and 3.

Continuing to refer to Figures 1, 2, 3, and 4 in combination, flowchart 450 further includes outputting query response 140 identifying at least one of the one or more content units identified in action 454 (action 455). As noted above, in some implementations system 100 may be configured to output query response 140 in real-time with respect to receiving semantic content search query 134/234/334. As also noted above, the expression real-time refers to a time interval of less than approximately 15s, such as 5s, or less. Action 455 may be performed by software code 110, executed by hardware processor 104 of system 100.

In some implementations, search engine 314 may utilize one or more of content metadata, content titles, genres, the popularity of specific items of content with other users, information included in user profile 126 of user 116, and contextual data as filters to selectively determine which of the content units identified in action 454 are to be identified by query response 140. Information included in user profile 126 by include a watch history of user 116, a search history of user 116, known preferences of user 116, and demographic information for user 116, such as age and gender for example. Contextual data used to filter the content units to be identified by query response 140 may include the time of day, day of week, or holiday season that semantic content search query 134/234/334 is received by system 100, as well as whether a particular item of content is newly launched.

In some implementations, the data used to determine the content units identified by query response 140 may not be revealed to user 116, but may be retained by system 100 and be used to evaluate the performance of ML model(s) 112/212/312. However, in some use cases it may be advantageous or desirable to include information in query response 140 to enhance its interpretability by user 116, such as the statement "we showed you result "x" because you watched show "y" or liked genre "z," for example.

It is noted that in some use cases, the content unit or units identified in action 454 may not be suitable for presentation to user 116 in isolation. By way of example, where a content unit identified in action 454 includes a single video frame, presentation of that single video frame to user 116 may not make sense without the context provided by the shot or scene in which the frame appears. Thus, in some implementations, system 100 may include content boundary database 120 including first and second bounding timestamps for segments of content corresponding respectively to content unit represented in embedding database 248 of search engine 114/214/314. Consequently, in some implementations, action 455 may include, prior to outputting query response 140, obtaining, for each of the one or more content units identified in the query response, first and second bounding timestamps for a respective content segment including that at least one content unit. In those implementations, query response 140 may include each first and second bounding timestamp.

When the method outlined by flowchart 450 includes obtaining first and second bounding timestamps for content segments, each of those content segments may take the form of a shot or scene from an episode of episodic entertainment content, a shot or scene from a movie, a sequence or sampling of scenes from an episode of episodic entertainment or across multiple episodes of episodic entertainment content, a sequence or sampling of scenes from a movie, an episode of episodic entertainment content in its entirety, or a movie in its entirety.

Although in some use cases, query response 140 may merely identify content likely to be desirable to user 116 based on semantic content search query 134/234/334, and in other implementations query response may include first and second bounding timestamps for each identified content unit, in yet other use cases, query response 140 may include some or all of the content identified by query response 140. That is to say, in some implementations, hardware processor 104 of system 100 may execute software code 110 to obtain content from content database content from content database 128 and make that content available as streaming content to user 116.

It is noted that although the above description refers to user 116 as a consumer of content, that characterization is merely by way of example. In some use cases, the end user of system 100 may be an internal division or team of a corporate entity implementing system 100. Alternatively, or in addition, system 100 may be utilized by a marketing partner of such an entity and may be used compile shows for promotions, for example. In those use cases, system 100 can be utilized as part of a larger human-in-the loop process.

With respect to the method outlined by flowchart 450, it is noted that, in various implementations, actions 451, 452, 453, 454, and 455 may be performed in an automated process from which human participation may be omitted.

Thus, the present application discloses systems and methods for semantic content searching. The novel and inventive systems and methods disclosed in the present application advance the state-of-the-art by introducing an AI inspired automated ML model-based approach to generating representations of various sized segments of content, such as representation in the form of vector embeddings for example, and populating a scalable search engine with those content representations. A semantic content search query is translated into an analogous representation by the ML model, and that generated representation is compared by the search engine to the content representations populating the search engine to identify one or more candidate matches to the content being searched for.

From the above description it is manifest that various techniques can be used for implementing the concepts described in the present application without departing from the scope of those concepts. Moreover, while the concepts have been described with specific reference to certain implementations, a person of ordinary skill in the art would recognize that changes can be made in form and detail without departing from the scope of those concepts. As such, the described implementations are to be considered in all respects as illustrative and not restrictive. It should also be understood that the present application is not limited to the particular implementations described herein, but many rearrangements, modifications, and substitutions are possible.

## Claims

1. A method for semantic content searching, the method comprising:
providing at least one machine learning, ML, model trained to translate between images and text, and a search engine populated with a plurality of content representations output by the at least one ML model;
receiving a semantic content search query describing a searched content;
generating, using the at least one ML model and the semantic content search query, a content representation corresponding to the searched content;
comparing, using the search engine, the generated content representation with the plurality of content representations to identify one or more candidate matches for the searched content;
identifying one or more content units each corresponding respectively to one of the one or more candidate matches; and
outputting a query response identifying at least one of the one or more content units.

2. The method of claim 1, wherein the search engine comprises a scalable vector search engine, and wherein the plurality of content representations comprises a plurality of vector embeddings.

3. The method of claim 2, wherein the plurality of vector embeddings comprise a first plurality of image embeddings and a second plurality of text embeddings.

4. The method of at least one of claims 1 to 3, wherein the content representation corresponding to the searched content comprises an image embedding generated based on the semantic content search query.

5. The method of at least one of claims 1 to 4, wherein the at least one ML model comprises a trained zero-shot neural network, NN.

6. The method of claim 5, wherein the trained zero-shot NN comprises a text encoder and an image encoder.

7. The method of at least one of claims 1 to 6, wherein the one or more content units each corresponding respectively to one of the one or more candidate matches comprise a plurality of content units having differing time durations.

8. The method of at least one of claims 1 to 7, wherein the one or more content units each corresponding respectively to one of the one or more candidate matches comprise at least one of a frame, a shot, or a scene of video.

9. The method of at least one of claims 1 to 8, further comprising:
obtaining for each of the at least one of the one or more content units identified in the query response, first and second bounding timestamps for a respective content segment including that at least one content unit;
wherein the query response includes the each first and second bounding timestamps.

10. The method of claim 9, wherein each respective content segment comprises at least one of a shot or scene from an episode of episodic entertainment content, a shot or scene from a movie, the episode, or the movie.

11. A system comprising a processing hardware and a memory storing a software code, **characterized by**:
the processing hardware adapted to execute the software code to perform the method of any of claims 1-10.
